# EUROPEAN PATENT APPLICATION

(11) **EP 1 309 118 A1**
(43) Date of publication of application: **07.05.2003**
(21) Application number: 01309226.7
(22) Date of filing: 31.10.2001
(51) Int. Cl.: H04J 14/02, H04Q 11/00, H04B 10/213

(54) **Wavelength division multiplexing optical fibre network**

(71) Applicant: Agilent Technologies Inc., Palo Alto, CA 94303-0870 (US)
(72) Inventor: Park, Christopher Anthony, Bacton, Stowmarket, Suffolk IP14 4LJ (GB); Harker, Andrew Thomas, Ipswich, Suffolk IP4 5QE (GB)
(74) Representative: Coker, David Graeme

(57) **Abstract**

The present invention relates to a wavelength division multiplexing (WDM) optical fibre network (1) comprising a plurality of optical transceiver units (28), a laser radiation generation unit (2), a plurality of network communication nodes (14-18) and one or more optical transmission fibres (12,20-23,61-65) linking each of the nodes within the network to the laser generation unit (2). The laser generation unit (2) generates a plurality of laser wavelengths (λ₁₋₄) and transmits these via the transmission fibre to the nodes (14-18), which tap from the fibre a particular one of said plurality of wavelengths (λ₁₋₄). Each node (14-18) has a laser radiation modulator (32) for modulating the tapped wavelength (λ₁₋₄), and is connected (30,36) to the transmission fibre (61-65;96,112) for launching into the fibre said modulated laser radiation (λ'₁₋₄).

## Description

The present invention relates to a wavelength division multiplexing (WDM) optical fibre network comprising a plurality of network nodes each having an optical transceiver unit.

Fibre optic transceiver units usually operate in an uncooled, uncontrolled environment where the temperature of operation can vary by 100°C or more. To date, these have mainly used single wavelength channels using laser wavelengths around 800 nm to 1650 nm for transmission and reception of optical signals.

One way of increasing the data transmission capacity of a fibre optic communications link is to use wavelength division multiplexing (WDM). In WDM, a plurality of laser wavelengths are generated. Because laser diode wavelength varies by up to about 8 nm owing to laser ageing, temperature and power changes, the channel separation in a WDM system with no control of laser wavelength is limited to a minimum of about 20 nm.

In order to increase the data carrying capacity of a fibre, it is necessary to reduce the wavelength spacing. Such higher capacity systems use what is referred to as Dense Wavelength Division Multiplexing (DWDM), now used in long haul and "metro" networks. In DWDM systems, each wavelength is accurately controlled by careful temperature control of each laser, and sometimes also using feedback from an optical wavelength reference. This allows the channel spacing in DWDM to be reduced to between 0.8 nm and 0.4 nm. Such careful control is only practical and economical at a Central Office or other main facility where the laser devices can be carefully controlled and monitored. The problem of maintaining control of wavelengths, and hence the cost of transceiver units, is increased if different nodes in a network must generate their own laser radiation at different, non-overlapping wavelengths.

As a result of these issues, DWDM has not been commercially used in local area networks and access networks.

It is an object of the present invention to provide a more practical and economical wavelength division multiplexing (WDM) optical fibre network, and network nodes for use in such a network.

According to the invention, there is provided an optical fibre network, comprising a laser radiation generation unit, a plurality of network communication nodes and one or more optical transmission fibres linking each of the nodes within the network to the laser generation unit, characterised in that:
a) the laser generation unit generates a plurality of laser wavelengths and transmits said wavelengths into the transmission fibre;
b) the transmission fibre carries the plurality of laser wavelengths around the network;
c) each node is connected to the transmission fibre to tap from the fibre a particular one of said plurality of wavelengths;
d) each node has a laser radiation modulator for modulating said tapped wavelength; and
e) each node is connected to the transmission fibre for launching into the fibre said modulated laser radiation.
   Also according to the invention, there is provided a method of operating an optical fibre network, the network comprising a laser radiation generation unit, a plurality of network communication nodes, each node having at least one modulator for modulating optical radiation, and one or more optical transmission fibres linking each of the nodes within the network to the laser generation unit, characterised in that the method comprises the steps of:
i) using the laser generation unit to generate a plurality of laser wavelengths and to transmit said wavelengths into the transmission fibre;
ii) carrying the plurality of laser wavelengths around the network in the transmission fibre;
iii) conveying optical radiation having a particular wavelength to said optical modulator;
iv) using said modulator to modulate optical radiation having said particular wavelength; and
v) launching said modulated optical radiation into the transmission fibre.

The invention also provides an optical node for a multi-wavelength fibre network, comprising an optical input for receiving a plurality of said wavelengths, an optical tap for accepting one of said wavelengths, an optical modulator arranged to receive and modulate said accepted wavelength, and an optical output for launching said modulated wavelength into the network.

Because the nodes do not generate optical radiation having the particular laser wavelength, but only modulate optical radiation received by the modulator for onward transmission in the network, all laser wavelengths can be generated by the laser generation unit. This unit can then be situated at a convenient location, which may be at a central office, or other main location, where the operation parameters and condition of each laser wavelength source can be carefully controlled and maintained. It is then no longer necessary to maintain close control of the operation conditions at each node of the network. This permits the wavelength separation between adjacent laser wavelengths, which will typically be in the near-infrared part of the spectrum, compliant with ITU standards.

The invention therefore permits a DWDM network to be implemented across network nodes where it is not practical or economical to stabilise the wavelength of a laser source.

Usually, the laser generation unit will generate laser light having a constant or a level optical power. Any such unmodulated signal is referred to herein as a "d.c. signal", whether or not such a signal is absolutely constant.

In preferred embodiments of the invention, in which the node is a transceiver unit, at least one of the nodes has an optical input for receiving from the transmission fibre a signal directed to the node. The optical input is separate from the connections to the transmission fibre for modulating said particular wavelength. This helps to simplify the design of the transceiver unit, so that both the modulator and the receiver can be optimised and operated independently of each other.

In one embodiment of the invention, at least one node may have an optical multiplexer connected to said transmission fibre. The optical multiplexer receives all of the optical radiation from the transmission fibre at said node, and directs at least some of the optical radiation having the particular wavelength for that node to the modulator for that node. This has the advantage that the modulation strength of a particular wavelength can be quite strong, as all the available power at that wavelength passes through the modulator.

In another embodiment of the invention, at least one node may have a wavelength sensitive filter. The node then has an optical splitter connected to said transmission fibre. The optical splitter directs a portion the optical radiation from the transmission fibre to the wavelength sensitive filter, which then passes only optical radiation having that node's particular wavelength to the optical modulator. Such a design may be simpler and less expensive to implement in hardware than one using an optical multiplexer.

The invention will now be described in further detail, and by way of example only, with reference to the accompanying drawings, in which:
Figure 1 is a schematic diagram of a WDM network according to a first embodiment of the invention, having a number of nodes each of which uses a multiplexer to select one wavelength for an optical modulator;
Figure 2 is a schematic diagram of a WDM network according to a second embodiment of the invention, having a number of nodes each of which uses a fibre splitter and an optical filter to select one wavelength for an optical modulator; and
Figure 3 is a schematic diagram of an optical transceiver, having an optical modulator and an optical receiver, neither of which has a specific wavelength sensitivity.

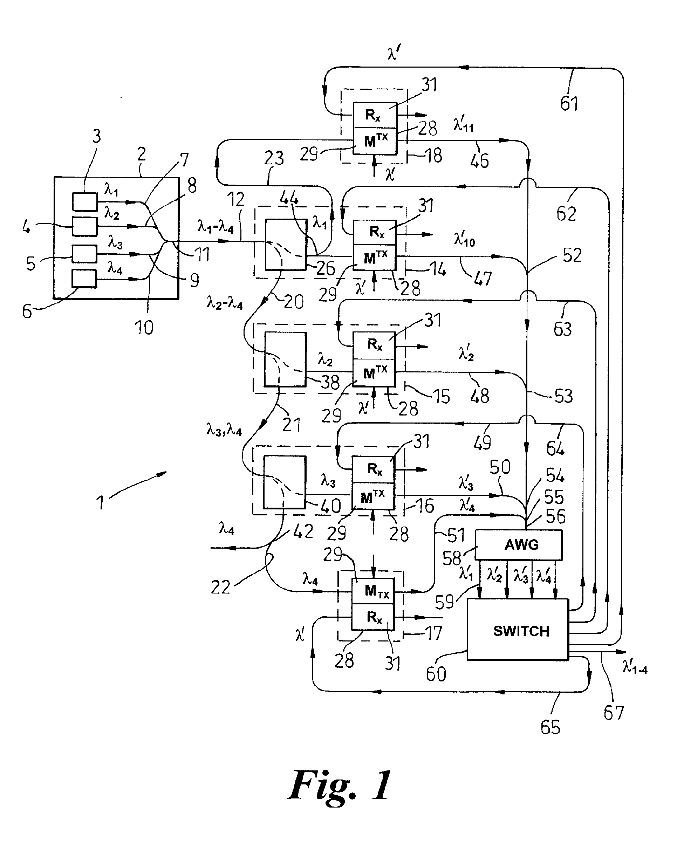

Figure 1 shows schematically a wavelength division multiplexing (WDM) optical fibre network 1. A laser light generation unit 2 has four laser diodes 3-6, that generate four corresponding wavelengths λ₁, λ₂, λ₃ and λ₄ in the region of 1550 nm. The wavelengths λ₁₋₄ are closely spaced, for example with no more than a 1 nm separation, and stabilised by known means, for example by means of temperature stabilisation of the laser diodes 3-6 and etalons supplying optical feedback (not shown). In use, the laser diodes are run at a constant power level and without amplitude or frequency modulation.

The four laser wavelengths λ₁₋₄ are coupled out of the laser diodes 3-6 by four short lengths of optical fibre 7,8,9,10 that are joined together at one or more splices 11 that couples all four wavelengths λ₁₋₄ into an output transmission fibre 12. Other known method of combining beams may also be used.

The output transmission fibre 12 carries the four wavelengths λ₁₋₄ to a first 14 of a plurality of network communication nodes 14-18. Further sections of optical fibre 20-23 link the nodes 14-18 together, and carry the laser wavelengths λ₁₋₄ around the network 1.

The first node 14 has an optical multiplexer 26 and a laser radiation optical transceiver unit 28. The transceiver includes a laser radiation modulator 29 and a laser radiation receiver 31.

The multiplexer 26 splits the input wavelengths λ₁₋₄ and directs one particular wavelength, here λ₁, towards the modulator, and directs optical radiation not having that particular wavelength λ₂₋₄ to the next section of transmission fibre 20 for transmission to the next network communication node 15. Such tapping of the laser radiation can be done using known optical techniques, for example using optical filters or gratings.

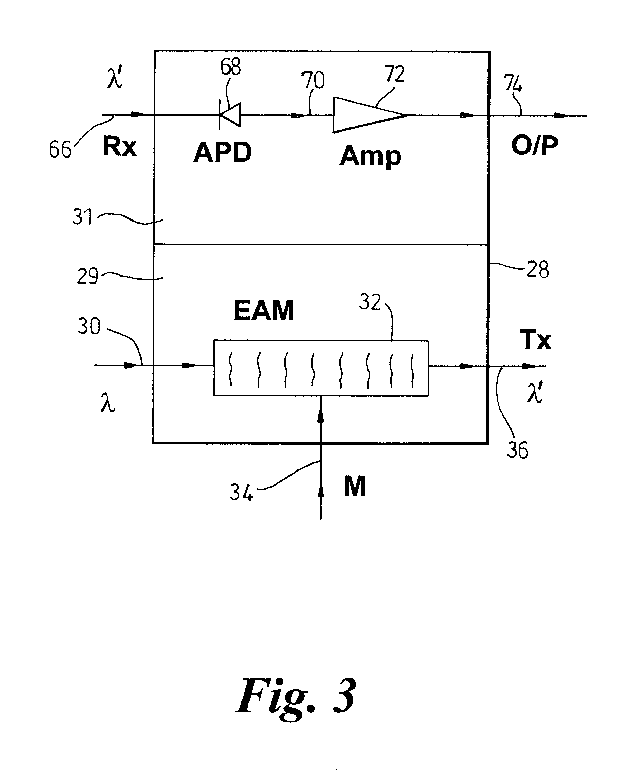

The first node modulator 29 is shown schematically in more detail in Figure 3. Because the components in the modulator 29 have a broad wavelength sensitivity around 1550 nm, each further network node 15-18 has a modulator 29 the same as that in the first node 14.

Each modulator 29 has an optical input 30 that receives unmodulated laser radiation of wavelength λ. This radiation enters an optical modulator, for example an electro-absorption modulator (EAM) 32 or a Mach-Zehnder modulator based on polymeric, GaAs, InP or LiNbO₃ materials, or other such device capable of imparting amplitude modulation on the incoming light signal. The modulator 32 has an input 34, here an electrical input which may receive a modulation signal (M). The modulator 32 imparts the modulation signal M onto the laser radiation, which exits the modulator on an optical output 36 (Tx). The modulated laser radiation, designated λ', has the same wavelength as the input radiation, but has a modulated amplitude.

Referring again to Figure 1, the second network node 15 is similar to the first node 14, and receives at its multiplexer 38 the three wavelength λ₂₋₄, which then directs optical radiation having one particular wavelength, here λ₂ to the modulator 29 for that node 15.

The remaining wavelengths λ₃ and λ₄ are directed to the next, third, network node 16, which is similar to the previous two nodes 14,15, and has a multiplexer 40 that directs one particular laser wavelength λ₃ to the modulator 29 for that node, and directs the remaining laser wavelength λ₄ to the next, fifth, network node 17.

Because the network is designed so that only one wavelength λ₄ is received at the fifth node 17, there is no need for this network node to have a multiplexer. The laser radiation is therefore received directly by the modulator 29 for that node 17. Optionally, the fifth node 17 may have a multiplexer to allow for subsequent extension of the network.

Optionally, the network may include further taps 42 at any of the fibre sections 20-22, by which laser radiation may be directed to other parts of the network 1.

The network nodes 14-16 having a multiplexer 26,38,40 may optionally also have a tap 44 between the multiplexer 26,38,40 and the modulator 29 by which optical radiation having the particular wavelength for the node can be directed to a further network node 18. Because this further network node 18 receives only one laser wavelength, there is no need for a multiplexer at this network node 18.

The modulated laser wavelengths λ' are carried away from the nodes 14-18 by sections of optical transmission fibre 46-51, and optionally joined together at splices 52-55, to an input 56 to an arrayed waveguide grating (AWG) 58. The AWG splits the modulated optical radiation into its four wavelengths λ'₁, λ'₂, λ'₃ and λ'₄ on individual fibres 59 which are then received by an optical switch 60. The optical switch 60 monitors the signals imparted by the modulation on each wavelength. Such signals can contain address information as well as data. The switch then directs each input wavelength λ'₁₋₄ on separate output optical transmission fibres 61-65, one to each of the network nodes 14-18. The output transmission fibres 61-65 may then carry to each of the transceiver units 28 at any time, any one of four modulated laser wavelengths λ'₁₋₄.

Optionally or alternatively, the optical switch 60 may route data out onto a wider metro or long haul network 67. In the latter case it is particularly important that the wavelengths λ' going onto the larger network conform to standards in terms of wavelength accuracy and stability.

Referring again to Figure 3, the laser radiation receiver 31 has an optical signal input (Rx) 66 that receives the switched modulated laser radiation λ', and sends this to a photodetector 68, here an avalanche photodiode (APD). The APD 68 is sensitive across a broad range of laser wavelengths encompassing all the modulated laser wavelengths λ'₁₋₄. Laser radiation striking the APD 68 generates an electrical signal 70 that is amplified by an amplifier 72, and passed to an output (O/P) 74 for the transceiver unit 28.

Because each of the wavelengths λ₁₋₄ is generated, modulated, switched and detected separately from the other wavelengths, each network node can transmit modulated optical radiation and receive modulated optical radiation at any time to any of the other network nodes, as long as there is no other network node operating on the same wavelength. In the illustrated example, there are two network nodes 14,18 using one particular wavelength λ₁. In this case, it would generally be necessary for these two network nodes to be controlled or synchronised so that these modulated their common wavelength λ₁ at different times.

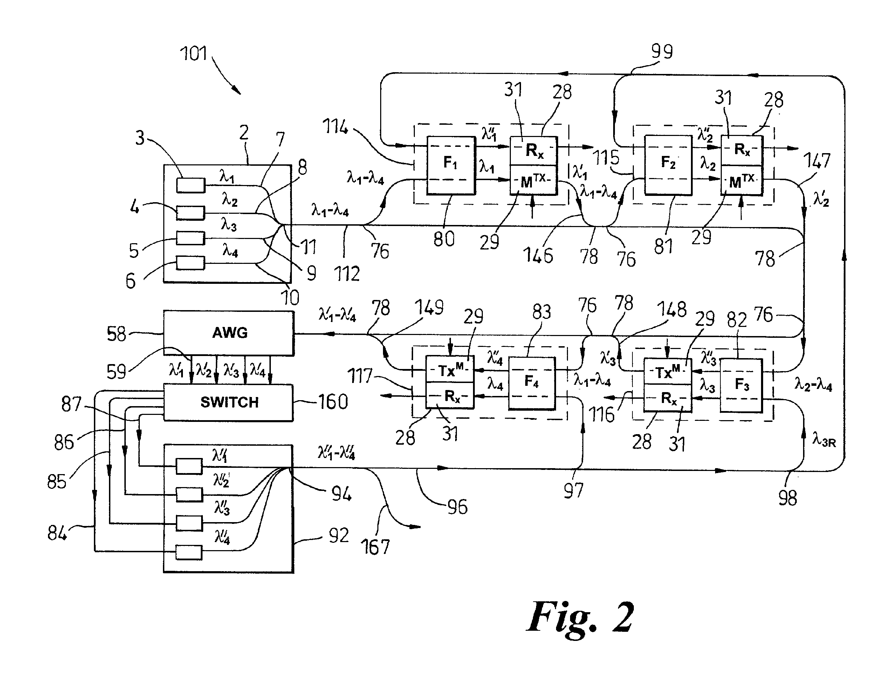

A second embodiment of the invention 101 is shown in Figure 2. Components of the second embodiment that are the same as those in the first embodiment 1 are indicated using the same reference numerals, and similar components are indicated with reference numerals incremented by 100.

The second embodiment 101 differs from the first embodiment mainly in that instead of using optical multiplexers to tap particular laser wavelengths λ₁₋₄ from an optical transmission fibre 112, the fibre 112 has at each network node 114-117 a first tap 76 to direct some of the optical radiation from the fibre 112 into the node, and an output fibre 146-149 to launch via a second tap 78 modulated optical radiation λ' back into the optical transmission fibre 112.

The taps 76,78 are not wavelength-specific, so at each of the first splices 76 all four wavelengths λ₁₋₄ are directed towards the respective node 114-117. Each node 114-117 therefore includes a filter element 80-83, designed to admit just one particular wavelength λ₁₋₄ of unmodulated optical radiation into the optical input 30 of the transceiver unit 28. The modulated optical radiation λ' is then launched back into the transmission fibre 112.

Note that although it may be convenient in many cases for the nodes 114-117 to be strung out in series along a single optical transmission fibre 112, various nodes could be in parallel with each other along different sections of transmission fibre that are joined together at splices.

The modulated wavelengths λ'₁₋₄ are then received by an arrayed waveguide grating (AWG) 58 and processed by a switch 160, in a similar manner to the first embodiment 1, except that the switch provides four electrical outputs 84-87, one for each of the four wavelengths. These outputs 84-87 are used to drive a second laser light generation unit 92, similar to the laser light source unit 2, except that the output optical radiation is modulated the same four particular wavelengths λ"₁, λ"₂, λ"₃ and λ"₄. These four modulated wavelengths λ"₁₋₄ are recombined at one or more splices 94, and transmitted along a single return transmission fibre 96. Splices 97-99 from the fibre direct the optical radiation to each of the four optical filters 80-83, which then pass just the particular modulated wavelength λ" to the optical signal input (Rx) 66 for that node 114-117. The electrical outputs 84-87 for the switch 160 are therefore arranged to modulate the laser light generation unit so that each wavelength λ"₁₋₄ carries the correct modulated signal to each node 114-117.

Again, the optical switch 160 may route data out onto a wider metro or long haul network 167.

Therefore, as with the first embodiment, the network 101 includes an optical switch 160 arranged to receive the modulated laser radiation λ'₁₋₄ from the nodes 114-117 and to distribute to the optical inputs 66 at the nodes an optical signal destined for that node 114-117.

In both embodiments 1;101, the optical splitter (either a multiplexer 26,38,40 or an optical tap 76) directs a different portion of the optical radiation to the transmission fibre for transmission to another node.

The second embodiment provides a number of advantages. First, only one outward and one return optical transmission fibre is required around the nodes of the network. Second, a relatively simple passive optical filter is needed at each node for both the unmodulated light and received optically modulated signal. The additional complexity of requiring two sets of wavelength stabilised laser light generation units 2,92 may be mitigated by having both units at the same location, and preferably integrated or packaged together.

The first embodiment provides other advantages. The use of optical multiplexers helps to minimise wasted optical radiation at each node. It would therefore be possible to have a greater number of network nodes 14-18. Because each node has a dedicated signal return transmission fibre 61-64, the strength of the return signal is also optimised. In addition, because there are no wavelength sensitive elements in the detection of signal at each node, the optical switch may perform purely optical switching of any of the wavelengths to any of the receivers 31.

Although not shown, each network node 14-18;114-117 can be connected to various types of electrical or computer equipment, for example personal computers, computer peripheral devices such as mass storage, printers, a private telephone exchange (PBX) or the public switched telephone network (PSTN).

In both embodiments 1,101 of the invention, each node 14-18;114 is connected to the transmission fibre(s) 1220,21,22;112 to tap from the fibre(s) a particular one of said plurality of wavelengths.

Although the environment at each laser generation unit 2,92 may have to be carefully controlled in a DWDM system, there is no need for close control of conditions at any of the nodes 14-18;11417. The invention therefore permits the single fibre data handling capacity of local or access networks to be increased towards those currently used in long haul and metro networks, which currently use up to 160 individual wavelength channels. Network nodes could be at customer premises, inside streetside cabinets or any other uncontrolled environment where data is generated.

The proposed transceivers and networks can operate at a wide range of data rates, typically, but not exclusively, in the range 2.5 Gb/s to 40 Gb/s.

The proposed transceivers and networks can also operate over a wide wavelength range dependent on the photodetector and the bandwidth of the data modulator, but are particularly useful in data handling applications using optical radiation ranging from 800 nm to 1650 nm.

The receiver section 31 of the transceiver 28, in some instances, may be used to monitor the incoming selected wavelength λ' or λ" by use of a power splitter before the modulator and fed to the photodiode. This could then be routed electrically, or optically, back to the location of the laser generation unit(s) 2,92, or elsewhere in the network, to modify the output signal.

## Claims

1. An optical fibre network (1), comprising a laser radiation generation unit (2), a plurality of network communication nodes (14-18;114-117) and one or more optical transmission fibres (12,20-23,61-65;96,112) linking each of the nodes within the network (1) to the laser generation unit (2), **characterised in that**:
a) the laser generation unit (2) generates a plurality of laser wavelengths (λ₁₋₄) and transmits said wavelengths into the transmission fibre;
b) the transmission fibre (12,20-23,61-65;96,112) carries the plurality of laser wavelengths (λ₁₋₄) around the network (1);
c) each node (14-18;114-117) is connected to the transmission fibre (12,20-23,61-65;96,112) to tap from the fibre a particular one of said plurality of wavelengths (λ₁₋₄);
d) each node (14-18;114-117) has a laser radiation modulator (32) for modulating said tapped wavelength (λ₁₋₄) ; and
e) each node (14-18;114-117) is connected (30,36) to the transmission fibre (61-65;96,112) for launching into the fibre said modulated laser radiation (λ'₁₋₄).

2. An optical fibre network (1) as claimed in Claim 1, in which each of said plurality of laser wavelengths (λ₁₋₄) generated by the laser generation unit (2) carries a d.c. signal.

3. An optical fibre network (1) as claimed in Claim 1 or Claim 2, in which at least one of the nodes (14-18;114-117) has an optical input (66) for receiving from the transmission fibre (12,20-23,61-65;96,112) a signal directed to the node, said optical input (66) being separate from said connections (30,36) to the transmission fibre for modulating said particular wavelength (λ₁₋₄).

4. An optical fibre network (1) as claimed in Claim 3, in which the network (1) comprises an optical switch (60;160), said switch being arranged to receive from the network (1) the modulated laser radiation (λ'₁₋₄) from the nodes (14-18;114-117) and to distribute to the optical inputs (66) an optical signal (λ'₁₋₄; λ"₁₋₄) destined for that node.

5. An optical fibre network (1) as claimed in Claim 4, in which said modulated laser radiation (λ'₁₋₄) is received at the optical switch (60,160) from each node (14-18;114-117).

6. An optical fibre network (1) as claimed in any preceding claim, in which: at least one node (14-16) has an optical multiplexer (26,38,40) connected to said transmission fibre (12,20,21); the optical multiplexer (26,38,40) receives all of the optical radiation from the transmission fibre at said node (14-16), and directs at least some of the optical radiation having the particular wavelength (λ₁₋₃) for that node (14-16) to the modulator (32) for that node.

7. An optical fibre network (1) as claimed in Claim 6, in which said multiplexer (26,38,40) directs optical radiation not having the particular wavelength (λ₁₋₄) for that node (14-16) to the transmission fibre (20-22) for transmission to another node (15-17).

8. An optical fibre network (1) as claimed in any of Claims 1 to 5, in which: at least one node (114-117) has a wavelength sensitive filter (80-83); the node has an optical splitter (76) connected to said transmission fibre (112); the optical splitter (76) directs a portion the optical radiation (λ₁₋₄) from the transmission fibre (112) to the wavelength sensitive filter (80-83); and said filter (80-83) passes only optical radiation having said particular wavelength (λ₁₋₄) for said node (114-117) to the optical modulator (32).

9. An optical fibre network (1) as claimed in Claim 8, in which said optical splitter (76) directs a different portion of the optical radiation (λ₁₋₄) to the transmission fibre (112) for transmission to another node (115-116).

10. An optical fibre network (1) as claimed in any preceding claim, in which the wavelength separation between adjacent laser wavelengths (λ₁₋₄) is no more than 1 nm.

11. An optical fibre network (1) as claimed in any preceding claim, in which the modulator (32) has a signal input (34) for receiving a signal to be imparted as modulation on the optical radiation (λ'₁₋₄) launched into the transmission fibre (46-51,61-65;112).

12. A method of operating an optical fibre network (1), the network (1) comprising a laser radiation generation unit (2), a plurality of network communication nodes (14-18;114-117), each node having at least one modulator (32) for modulating optical radiation (λ₁₋₄), and one or more optical transmission fibres (12,20-23,61-65;96,112) linking each of the nodes within the network to the laser generation unit (2), **characterised in that** the method comprises the steps of:
i) using the laser generation unit (2) to generate a plurality of laser wavelengths (λ₁₋₄) and to transmit said wavelengths into the transmission fibre (12,20-23,61-65;96,112);
ii) carrying the plurality of laser wavelengths (λ₁₋₄) around the network (1) in the transmission fibre;
iii) conveying optical radiation having a particular wavelength (λ₁₋₄) to said optical modulator (32);
iv) using said modulator (32) to modulate optical radiation having said particular wavelength (λ₁₋₄); and
v) launching said modulated optical radiation (λ'₁₋₄) into the transmission fibre (61-65;96,112).

13. An optical node (14-18;114-117) for a multi-wavelength (λ₁₋₄) fibre network (1), comprising an optical input for receiving a plurality of said wavelengths (λ₁₋₄), an optical tap for accepting one of said wavelengths (λ₁₋₄), an optical modulator (32) arranged to receive and modulate said accepted wavelength, and an optical output (36) for launching said modulated wavelength into the network (1).
